Europäisches Patentamt

(19) European Patent Office

Office européen des brevets

(11) Publication number: **0 051 485**
**A1**

(12) # EUROPEAN PATENT APPLICATION

(21) Application number: **81305211.5**

(22) Date of filing: **02.11.81**

(51) Int. Cl.³: **B 22 C 1/16**
**B 22 C 1/22, B 22 C 9/12**
**C 08 J 3/24**

(30) Priority: **05.11.80 US 204330**
**31.07.81 US 288907**

(43) Date of publication of application:
**12.05.82 Bulletin 82/19**

(84) Designated Contracting States:
**DE FR GB IT**

(71) Applicant: **CL INDUSTRIES, INC.**
**P.O. Box 811**
**Danville Illinois 61832(US)**

(72) Inventor: **Woodson, Wayne Dale**
**2320 N. Vermillion**
**Danville Illinois 61832(US)**

(72) Inventor: **Stewart, Patrick Hall**
**16 W. Conron**
**Danville Illinois 61832(US)**

(74) Representative: **Szczuka, Jan Tymoteusz et al,**
**Cruikshank & Fairweather 19 Royal Exchange Square**
**Glasgow G1 3AE Scotland(GB)**

(54) Catalyst/resin precursor or prepolymer composition.

(57) Resin/peroxide composition comprising a major amount of a resin precursor or prepolymer selected from the group consisting of furfuryl alcohol and polyfurfuryl alcohol resin precursors, and furfuryl alcohol-formaldehyde resin, phenolic and urea-formaldehyde modified furfuryl alcohol-formaldehyde resin, phenolic modified furfuryl alcohol-formaldehyde resin, urea-formaldehyde modified furfuryl alcohol-formaldehyde resin and phenolic resin prepolymers, and a minor amount of a peroxide.

There is used as the peroxide diisopropylbenzene hydroperoxide. This produces a storage stable composition.

Also provided is a method of forming a sand core or mould which method comprises: mixing a major amount of sand with a minor amount of a premixed resin/peroxide composition.

0051485

# CATALYST/RESIN PRECURSOR OR PREPOLYMER COMPOSITION

This invention relates to organic peroxide/ resin precursor or prepolymer compositions and in particular to a storage stable, resin/peroxide composition comprising a major amount of a resin precursor or prepolymer selected from the group consisting of furfuryl alcohol and polyfurfuryl alcohol resin precursors, and furfuryl alcohol-formaldehyde resin, phenolic and urea-formaldehyde modified furfuryl alcohol-formaldehyde resin, phenolic modified furfuryl alcohol-formaldehyde resin, urea-formaldehyde modified furfuryl alcohol-formaldehyde resin and phenolic resin prepolymers, and a minor amount of a peroxide.

In the foundry industry, sand is coated with resin binders and formed into moulds and cores for the production of precision castings. A wide variety of techniques has been developed for the manufacture of sand cores and moulds. These involve the hot box technique for mould and core formation; the shell method; the "No-Bake", and the cold-box technique.

In the hot box and shell methods, sand moulds and cores are formed by heating a mixture of sand with a thermosetting resin at a temperature of about $300^\circ$ to $600^\circ F$ (150 to $315^\circ C$) in contact with patterns which produce the desired shape for the mould or core. The resin is polymerized and a core or mould is formed. Procedures of this type are described in Dunn et al. U.S. Patent 3,059,297 and Brown et al. U.S. Patent 3,020,609.

A particular disadvantage of the hot box and shell methods is the necessity for heating the pattern boxes to $300^\circ$ to $600^\circ F$ (150 to $315^\circ C$) to polymerize and cure the resin binder. This involves considerable expense and is generally a high cost technique.

The cold box techniques for core and mould formation involve the use of sand mixed or coated with resins which may be cured at room temperature by acid or base catalysis. Acid or base catalysts have been used in liquid, solid or gaseous form. Typical cold box processes are shown in Blaies U.S. Patent 3,008,205; Dunn et al. U.S. Patent 3,059,297; Peters et al. U.S. Patent 3,108,340; Kottke et al. U.S. Patent 3,145,438; Brown et al. U.S. Patent 3,184,814; Robins U.S. Patent 3,639,654; Australian Patent 453,160 and British Patent 1 225,984. Many of these processes involve the use of a sulfur-containing acid catalyst such as benzene sulfonic acid, toluene sulfonic acid and the like.

A few years ago, a process was developed for room temperature polymerization of condensation resins in which an acid-curing agent is generated in situ in the resin or on a sand-resin mix. It had previously been suggested in U.S. Patent 3,145,438 to inject $SO_3$ in the form of a gas into a mixture of sand and resin to cure the resin at room temperature. It was found, however, that this process causes an instantaneous curing of the resin in the region subjected to treatment by $SO_3$ which impedes the diffusion of this gas to other parts of the resin, particularly the central parts of the mixture.

Subsequently, a method was developed which avoided this difficulty. In Richard U.S. Patent 3,879,339, it is disclosed that sand may be coated with a suitable oxidizing agent, such as an organic peroxide, and coated with the resin to be used in binding the sand into the form of a core or mould. The sand-resin mixture is then formed into suitable shape and treated with gaseous $SO_2$. The $SO_2$ is oxidized, in situ, to $SO_3$ and converted to sulfur-containing acid by water present in the mixture. The sulfur-containing acid which is generated in situ causes a rapid and uniform polymerization of the resin at room temperature. This process has proved successful commercially and is applicable to phenolic resins, furan resins, and urea-formaldehyde resins, as well as mixtures and copolymers thereof.

In the cold box method of Richard U.S. Patent 3,879,339, there are a large variety of peroxides disclosed which may be added to sand along with resins which are used in forming sand cores or moulds. This composition is subsequently formed into shape and treated with gaseous $SO_2$. The peroxides which are disclosed in the Richard Patent are mostly quite expensive and, in many cases, are difficult to handle and to ship or transport. Organic peroxides require special approval for transportation in interstate commerce. Organic peroxides are often highly flammable or present other fire hazards. Organic peroxides also are often shock sensitive and may explode or detonate under certain conditions. As a result, any and all organic peroxides can not be used in the Richard process because of economic and safety consideration.

In copending U.S. patent application Serial No. 204,330 filed November 5, 1980, an organic peroxide composition is disclosed which is particularly useful in resin polymerization by a process involving gassing with $SO_2$. The application makes some reference to the fact that the particular organic peroxide is unexpectedly soluble in certain resins to form storage-stable compositions.

It is an object of the present invention to provide a new and improved storage stable, easily transportable, non-detonating organic peroxide/resin composition for use in the polymerization of a resin by gassing with $SO_2$.

The present invention provides a storage stable, resin/peroxide composition comprising a major amount of a resin precursor or prepolymer selected from the group consisting of furfuryl alcohol and polyfurfuryl alcohol resin precursors, and furfuryl alcohol-formaldehyde resin, phenolic and urea-formaldehyde modified furfuryl alcohol-formaldehyde resin, phenolic modified furfuryl alcohol-formaldehyde resin, urea-formaldehyde modified furfuryl alcohol-formaldehyde resin and phenolic resin prepolymers, and a minor amount of a peroxide characterized in that said peroxide comprises a diisopropylbenzene hydroperoxide.

The peroxide composition is characterized by its storage stability, resistance to detonation, low flammability, ease of handling and improved catalytic properties in the polymerization of certain resins. The preferred peroxide, based on economic considerations, is a crude mixture, called crude diisopropylbenzene hydroperoxide, of a major amount of diisopropylbenzene monohydroperoxide and a minor amount of diisopropylbenzene dihydroperoxide, together with solvents and unreacted materials obtained as a byproduct in the commercial manufacture of p-diisopropylbenzene dihydroperoxide. A particularly stable and useful composition consists of about 20% solvent, preferably cyclohexanone, and 80% of a mixture consisting of a major part of crude diisopropylbenzene hydroperoxide and a minor part of hydrogen peroxide.

The above peroxide composition, and the diisopropylbenzene hydroperoxide, are soluble in or miscible with resin precursors, such as furfuryl alcohol and polyfurfuryl alcohol, and resin prepolymer such as furfuryl alcohol-formaldehyde resin, phenolic and/or urea-formaldehyde modified furfuryl alcohol-formaldehyde resin and phenolic resin prepolymers to form storage-stable compositions. The peroxide composition and the resin precursor or prepolymer can be added to sand, formed into cores or moulds, and gassed with sulfur dioxide at a temperature from room temperature to about 300°F (150°C) for a time of from a fraction of a second, preferably a few seconds, to several minutes to form superior sand cores and moulds.

Improved peroxide compositions of the invention are particularly useful in the process of Richard U.S. Patent 3,879,339. The peroxide composition consists of a solution or mixture of diisopropylbenzene monohydroperoxide or a crude composition containing diisopropylbenzene monohydroperoxide and diisopropylbenzene dihydroperoxide, called crude diisopropylbenzene hydroperoxide, with a solvent which results in a stable system. In most cases the diisopropylbenzene monohydroperoxide or diisopropylbenzene dihydroperoxide is 1,4-diisopropylbenzene monohydroperoxide or 1,4-diisopropylbenzene dihydroperoxide, although o-diisopropylbenzene monohydroperoxide, o-diisopropylbenzene dihydroperoxide, m-diisopropylbenzene monohydroperoxide, m-diisopropylbenzene dihydroperoxide, or mixtures thereof are also suitable for the purposes of this invention. It should be noted that, for the purposes of this invention, diisopropylbenzene monohydroperoxide is effective but diisopropylbenzene dihydroperoxide is less effective in the process of Richard U.S. Patent 3,879,339. The presence of diisopropylbenzene dihydroperoxide in admixture with diisopropylbenzene monohydroperoxide is therefore not usually desired. The term "crude diisopropylbenzene hydroperoxide" as used hereinafter is intended to mean a composition substantially as defined above.

In the commercial manufacture of p-diisopropylbenzene dihydroperoxide, an organic peroxide composition is obtained as a byproduct known in the trade as crude diisopropylbenzene hydroperoxide and consisting essentially of diisopropylbenzene dihydroperoxide; diisopropylbenzene monohydroperoxide; a-hydroxy, a-hydroperoxy diisopropyl benzene; a-hydroxy, diisopropyl benzene; and p-diisopropyl benzene.

One particular crude diisopropylbenzene hydroperoxide composition which was found to be useful had approximately the following composition:

| 55.9 % | diisopropylbenzene monohydroperoxide |
|--------|--------------------------------------|
| 11.0 % | diisopropylbenzene dihydroperoxide |
| 10.0 % | diisopropylbenzene |
| 0.44% | benzene |
| 1.5 % | water |
| 21.0 % | Mixture of 1-isopropyl-4-isopropanol |

benzene, diisopropyl benzene, 1-isopropanol-4-isopropylbenzene hydroperoxide, and p-benzene dipropenoic acid disodium salt.

The stated percentages, as used herein, are by weight based on total composition unless otherwise stated.

Solvents which are usable in preparing stable peroxide compositions in accordance with this invention are organic solvents which are cosolvents for diisopropyl-benzene monohydroperoxide, diisopropylbenzene dihydro-peroxide and hydrogen peroxide. Solvents which are particularly useful are methanol, cyclohexanone, glycol ethers, furfuryl alcohol, diisopropyl benzene (in compositions not containing hydrogen peroxide), dioxane and phenol. Such solvents will dissolve mixtures of diisopropylbenzene monohydroperoxide and diisopropylbenzene dihydroperoxide, such as crude diisopropylbenzene hydroperoxide and are cosolvents for hydrogen peroxide.

The proportions of organic peroxides and solvents in the following Examples are for purposes of illustration only. The peroxides may be mixed with any of the specified types of solvents at suitable proportions within the range of solubilities therein. Generally, the peroxides are present in an amount sufficient to provide a desired level of Active Oxygen in the composition, preferably about 6 - 8%. The composition may be prepared with or without the hydrogen peroxide but generally it is best to include the hydrogen peroxide. A level of about 80% of a mixture of crude diisopropylbenzene hydroperoxide and hydrogen peroxide in one of the specified solvents will produce the desired amount of Active Oxygen. If substantially pure diisopropylbenzene monohydroperoxide is used in the composition, it will produce the desired amount of Active Oxygen at a much lower concentration therein. Likewise, increasing the amount of hydrogen peroxide may permit some decrease in the amount of the organic peroxide used. The concentration of hydrogen peroxide can not be increased very much without exceeding safety limits.

A series of peroxide solutions or compositions were prepared and tested for stability and safety and were subsequently tested in the polymerization of resins.

## PREPARATION OF CATALYST AND STABILITY TESTING

### EXAMPLE I

A peroxide composition was prepared having the following composition:

68 %    crude diisopropylbenzene hydroperoxide

21 %    cyclohexanone

11 %    70% hydrogen peroxide

It should be noted that the amount of solvent in this composition is somewhat critical. If the proportion of cyclohexanone is decreased below about 19% some of the ingredients begin to drop out of solution.

This composition was tested by the Association of American Railroads, Bureau of Explosives and was found to be satisfactory for safe transportation. A portion of the composition was maintained at 75$^{o}$C under a water reflux condensor for 48 hours. It did not ignite or undergo marked decomposition.

A portion of the sample contained in a plastic cup was initiated with a #8 electric blasting cap, it did not explode or ignite. The same results were obtained when the same test was conducted using 120ml. of the sample absorbed in eight grams of cotton.

A portion of the sample was placed on a kerosene-soaked sawdust bed and ignited with a burning fuse. When the fire reached the test portion, it burned only moderately.

One gallon of the sample contained in a one gallon metal can with a friction-sealed lid was heated on a kerosene/wood fire. The lid opened partially six minutes after the kerosene/wood was ignited. The material was ignited and burned with a black smoke for about five minutes. The flame height was about 40 - 50 feet (13 to 17 metres).

The flash point of this sample was determined to be 174°F (75°C) using the SETA Closed-Cup Flash Point Tester.

In a burning test, the sample could be ignited with a match and burned with a maximum flame height of eighteen inches. In a pressure vessel test, the rupture disc failed to burst with the vent hole opening of one mm in diameter. In an impact test, the sample failed consistently to explode or ignite in the Bureau of Explosives Impact Apparatus under a drop height of ten inches when the sample was tested alone or absorbed in filter paper.

In a Rapid Heat Test, the sample boiled at 105°C - 175°C, left about half of the sample behind. The colour of the material turned darker as the temperature increased. The remained dark yellow material turned to a redish-orange colour at 187°C, then turned to brown colour at 310°C. No further reaction was observed up to 325°C. In a SADT Test, no exothermic reaction was observed for seven days with one gallon of the same sample contained in a plastic bottle was tested at 130°F (55°C). However, the colour of the material turned brown.

Based on the above test results, the Bureau of Explosives recommendation was that the composition to be described as 1,4-diisopropylbenzene monohydroperoxide solution, not over 60% and classed as Organic Peroxide under DOT regulations. This material is considered safe and transportable.

The peroxide composition of this example has an Active Oxygen content of about 7.8 - 8.0%. After storage at 130°F (55°C) for one week, Active Oxygen decreases by about 0.3%. This composition is stable for an indefinite period of time at temperatures near 0°F (-18°C). This composition is usable in resin polymerization, as described below.

## EXAMPLE II

A peroxide composition was prepared as follows:

| 67.20% | crude diisopropylbenzene hydroperoxide |
| 20.60% | cyclohexanone |
| 1.96% | methanol |
| 10.24% | 70% hydrogen peroxide |

This formulation is stable under the same conditions discussed in connection with Example I. The Active Oxygen content of this composition is about 7.8 - 8.0%. After storage at 130°F (55°C) for one week, Active Oxygen decreases by about 0.3%. This blend is stable for an indefinite period at temperatures near 0°F (-18°C). This composition can be used in the polymerization of resins as described below.

## EXAMPLE III

A peroxide composition was prepared as follows:

| 69 % | crude diisopropylbenzene hydroperoxide |
| 10 % | cyclohexanone |
| 10 % | dipropyleneglycol |
| 11 % | 70% hydrogen peroxide |

This formulation is stable under the same conditions discussed in connection with Examples I and II. The Active Oxygen content of this composition is about 7.8 - 8.0%. After storage at 125°F (53°C) for 30 days, Active Oxygen decreases by about 0.4%. This blend is stable for an indefinite period at temperatures near 0°F (-18°C). This composition can be used in the polymerization of resins as described below.

EXAMPLE IV

A peroxide composition is prepared as follows:

40 % diisopropylbenzene monohydroperoxide 50 % cyclohexanone 10 % 70% hydrogen peroxide

This formulation is stable under the same conditions discussed in connection with Examples I and II. The Active Oxygen content of this composition is about 5.8 - 6.0%. After storage at 130°F (55°C) for 7 days, Active Oxygen decreases by about 0.3%. This blend is stable for an indefinite period at temperatures near 0°F (-18°C). This composition can be used in the polymerization of resins as described below.

EXAMPLE V

A peroxide composition is prepared as follows:

50 % diisopropylbenzene monohydroperoxide 50 % diisopropylbenzene.

This formulation is stable under the same conditions discussed in connection with Examples I and II. The Active Oxygen content of this composition is somewhat lower than the other compositions, but is high enough to be effective. After storage at 130°F (55°C) for 7 days, Active Oxygen decreases by about 0.3%. This blend is stable for an indefinite period at temperatures near 0°F (-18°C). This composition can be used in the polymerization of resins as described below.

SOLUBILITY OF PEROXIDE COMPOSITION IN RESIN

It was found unexpectedly that the above peroxide compositions are soluble in and form stable mixtures with resin precursors, such as furfuryl alcohol and polyfurfuryl alcohol, and resin prepolymers such as furfuryl alcohol-formaldehyde resin, phenolic and/or urea-formaldehyde modified furfuryl alcohol-formaldehyde resin and phenolic resin prepolymers, in the range from about 10 to 40%wt. to form storage-stable compositions.

## EXAMPLE VI

A solution of 35% crude diisopropylbenzene hydroperoxide and 65% furfurylalcohol-formaldehyde resin prepolymer was prepared and stored for six weeks at 105°F (40°C). At the end of this time, the blend showed no performance loss when polymerized to form sand cores or moulds.

A solution of 25% crude diisopropylbenzene hydroperoxide and 75% furfurylalcohol-formaldehyde resin prepolymer was prepared and stored for six weeks at 105°F (40°C). At the end of this time, the blend showed no performance loss when polymerized to form sand cores or moulds.

A solution of 20% crude diisopropylbenzene hydroperoxide and 80% furfurylalcohol-formaldehyde resin prepolymer was prepared and stored for six weeks at 105°F (40°C). At the end of this time, the blend showed no performance loss when polymerized to form sand cores or moulds.

Similar results are obtained when diisopropylbenzene monohydroperoxide is blended with the resin prepolymer at these concentrations. In comparison, it had previously been found that methyl ethyl ketone peroxide was not stable when mixed with furfurylalcohol-formaldehyde resin prepolymer even at room temperature.

## EXAMPLE VII

A solution of 10% crude diisopropylbenzene hydroperoxide and 90% furfurylalcohol-formaldehyde resin prepolymer is prepared and stored for six weeks at 105°F (40°C). At the end of this time, the blend shows no performance loss when polymerized to form sand cores or moulds.

A solution of 20% crude diiscpropylbenzene hydroperoxide and 80% phenol-formaldehyde resin prepolymer is prepared and stored for six weeks at 105°F (40°C). At the end of this time, the blend shows no performance loss when polymerized to form sand cores or moulds. This composition, however, is much less effective in forming sand cores or moulds than the furfurylalcohol-formaldehyde resin prepolymer compositions. The initial strength and hardness of the sand cores or moulds are lower, although they are about the same after 24 hours.

A solution of 20% crude diisopropylbenzene hydroperoxide and 80% furfurylalcohol-formaldehyde/phenol-formaldehyde/urea-formaldehyde resin prepolymer (50-20-30 wt. ratio) is prepared and stored for six weeks at 105°F (40°C). At the end of this time, the blend shows no performance loss when polymerized to form sand cores or moulds.

Similar results are obtained when diisopropylbenzene monohydroperoxide is blended with the resin prepolymer at these concentrations. In comparison, it had previously been found that methyl ethyl ketone peroxide was not stable when mixed with furfurylalcohol-formaldehyde resin prepolymer and other resin prepolymers even at room temperature.

## EXAMPLE VIII

A solution of 35% crude diisopropylbenzene hydroperoxide and 65% furfurylalcohol (resin precursor) is prepared and stored for six weeks at 105°F (40°C). At the end of this time, the blend shows no performance loss when polymerized to form sand cores or moulds.

A solution of 25% crude diisopropylbenzene hydroperoxide and 75% polyfurfurylalcohol (resin precursor) is prepared and stored for six weeks at 105°F (40°C). At the end of this time, the blend showed no performance loss when polymerized to form sand cores or moulds.

Similar results are obtained when diisopropylbenzene monohydroperoxide is blended with the resin precursor at these concentrations. In comparison, methyl ethyl ketone peroxide is not stable when mixed with furfurylalcohol or polyfurfuryl alcohol (resin precursors) even at room temperature.

## USE OF ORGANIC PEROXIDES IN RESIN POLYMERIZATION

The organic peroxide compositions described above are unexpectedly superior in stability and resistance to detonation which makes them easier to transport, store and use. These peroxide compositions are unexpectedly superior to methyl ethyl ketone peroxide (which has been the standard peroxide for resin polymerization by the $SO_2$ gassing process) for the polymerization of furfuryl-alcohol-formaldehyde resin prepolymers by the $SO_2$ gassing process although they are not effective in the polymerization of phenolics by such a process.

In the following examples the core strength and tensile strength of the core and mould products are quoted in units of pounds per square inch with the metric equivalents given in brackets in units of Newtons per square metre corresponding to Pascals. The core hardness values quoted are those obtained using a core hardness tester manufactured by the H.W. Dietert Company and are based on the force required to cause the teeth of the tester to penetrate the core.

## EXAMPLE IX

A foundry-grade sand was mixed with 1.25% wt. (based on the sand) of a furfurylalcohol-formaldehyde resin prepolymer and mulled for three minutes. Next, 50-55% wt. (based on the resin weight) of the peroxide composition of EXAMPLE I was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about $300^{\circ}F$ ($150^{\circ}C$) can be used.

The product obtained after 20 seconds, as described above, is capable of being handled immediately. This product has better hardness than a like product made using methyl ethyl ketone peroxide. Core strengths of 200 ($1,379.10^6$) after 30 minutes and 273 ($1,882.10^6$) after 24 hours are substantially higher than are obtained using methyl ethyl ketone peroxide, viz. 185 ($1,276.10^6$) after 30 minutes and 218 ($1,503.10^6$) after 24 hours, respectively.

### EXAMPLE X

A different foundry-grade sand was mixed with 1.25% wt. (based on the sand) of a furfurylalcohol-formaldehyde resin prepolymer and mulled for three minutes. Next, 50-55% wt. (based on the resin weight) of the peroxide composition of EXAMPLE II was added and the mixture mulled for an additional three minutes The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about $300^{\circ}F$ ($150^{\circ}C$) can be used.

The product obtained after 20 seconds, as described above, is capable of being handled immediately. This product has better hardness than a like product made using methyl ethyl ketone peroxide. Core strength 444 ($3,062.10^6$) after 24 hours was substantially higher than is obtained using methyl ethyl ketone peroxide, viz. 386 ($2,662.10^6$) after 24 hours.

### EXAMPLE XI

A foundry-grade sand was mixed with 1.25% (based on the sand) of a furfurylalcohol-formaldehyde resin prepolymer and mulled for three minutes. Next, 50-55% wt. (based on the resin weight) of the peroxide composition of EXAMPLE III was added and the mixture mulled for an additional three minutes. The sand/resin/ peroxide mix was then rammed or blown into a mould and gassed with $SO_2$ for about 1.0 seconds at room temperature, followed by an air purge. Gassing times of about 0.5 seconds to about 5 minutes and temperatures from room temperature to about $300^{\circ}F$ ($150^{\circ}C$) can be used.

The product obtained after 20 seconds, as described above, is capable of being handled immediately. This product has better hardness than a like product made using methyl ethyl ketone peroxide. Core strengths of 210 ($1,448.10^6$) after 30 minutes and 338 ($2,331.10^6$) after 24 hours are substantially higher than are obtained using methyl ethyl ketone peroxide, viz. 185 ($1,276.10^6$) after 30 minutes and 218 ($1,503.10^6$) after 24 hours, respectively.

## EXAMPLE XII

A foundry-grade sand was mixed with 1.25% wt. (based on the sand) of a furfurylalcohol-formaldehyde resin prepolymer and mulled for three minutes. Next, 50-55% wt. (based on the resin weight) of the peroxide composition of EXAMPLE IV was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about $300^{\circ}F$ ($150^{\circ}C$) can be used.

The product obtained after 20 seconds, as described above, is capable of being handled immediately. This product has better hardness than a like product made using methyl ethyl ketone peroxide. Core strengths after 30 minutes and after 24 hours are substantially higher than are obtained using methyl ethyl ketone peroxide.

Similar results are obtained when the peroxide composition of EXAMPLE V is used in the same test procedure.

## POLYMERIZATION OF RESIN (OR PRECURSOR)/PEROXIDE BLENDS

### EXAMPLE XIII

A foundry-grade sand was mixed with 1.9% wt. (based on the sand) of a furfurylalcohol-formaldehyde resin prepolymer-peroxide blend of the composition of EXAMPLE VII and mulled for three minutes. Next, 10% wt. (based on the resin weight) of 50% hydrogen peroxide was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately. This product has better hardness than a like product made using methyl ethyl ketone peroxide added separately (the mixture is not stable). The core strength of 254 ($1,75 \cdot 10^6$) after 30 minutes is substantially higher than is obtained using methyl ethyl ketone peroxide added separately, viz. 185 ($1,28 \cdot 10^6$) after 30 minutes.

This procedure was repeated under a number of different conditions and in some cases satisfactory results are obtained using the resin-peroxide blend without the addition of hydrogen peroxide to the composition.

### EXAMPLE XIV

A foundry-grade sand was mixed with 1.25% wt. (based on the sand) of a 65% furfurylalcohol-formaldehyde resin prepolymer-35% crude diisopropylbenzene hydroperoxide blend (produced according to Example VI) and mulled for three minutes. Next, 7% wt. of 70% hydrogen peroxide was added and the mixture mulled for an additional three minutes. The sand/resin/peroxide mix was then rammed or blown into a mould and gassed with $SO_2$ for about 1.0 seconds at room temperature, followed by an air purge.

Gassing times of about 0.5 seconds to about 5 minutes and temperatures from room temperature to about $300°F$ ($150°C$) can be used.

The product obtained after 20 seconds, as described above, is capable of being handled immediately. This product has better hardness than a like product made using methyl ethyl ketone peroxide. Core strengths in excess of 200 ($1,38.10^6$) after 30 minutes and in excess of 275 ($1,90.10^6$) after 24 hours are substantially higher than are obtained using methyl ethyl ketone peroxide, viz. 185 ($1,28.10^6$) after 30 minutes and 218 ($1,50.10^6$) after 24 hours, respectively.

## EXAMPLE XV

A foundry-grade sand was mixed with 1.25% wt. (based on the sand) of a 75% furfurylalcohol-formaldehyde resin prepolymer-25% crude diisopropylbenzene hydroperoxide blend (produced according to Example VI) and mulled for three minutes. Next, 7% wt. of 70% hydrogen peroxide was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about $300°F$ ($150°C$) can be used.

The product obtained after 20 seconds, as described above, is capable of being handled immediately, has a tensile strength of 133 ($0.92.10^6$). This product has better hardness, i.e. 77 ($0,53.10^6$) than a like product made using methyl ethyl ketone peroxide. Core strengths of 251 ($1,73.10^6$) after 5 minutes (hardness 92), 294 ($2,03.10^6$) after one hour (hardness 86) and 280 ($1,93.10^6$) after 24 hours (hardness 89) are substantially higher than are obtained using methyl ethyl ketone peroxide.

## EXAMPLE XVI

A foundry-grade sand was mixed with 1.25% wt.

(based on the sand) of a 75% furfurylalcohol-formaldehyde resin prepolymer-25% crude diisopropylbenzene hydroperoxide blend (produced according to Example VI) and mulled for three minutes. Next, 7% wt. of 50% hydrogen peroxide was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately, has a tensile strength of 109 $(0,75.10^6)$. This product has better hardness, i.e. 80, $(0,55.10^6)$ than a like product made using methyl ethyl ketone peroxide. Core strengths of 255 $(1,76.10^6)$ after 5 minutes (hardness 84), 299 $(2,06.10^6)$ after one hour (hardness 88) and 299 $(2,06.10^6)$ after 24 hours (hardness 88) are substantially higher than are obtained using methyl ethyl ketone peroxide.

## EXAMPLE XVII

A foundry-grade sand was mixed with 1.25% wt. (based on the sand) of a 75% furfurylalcohol-formaldehyde resin prepolymer-25% crude diisopropylbenzene hydroperoxide blend (produced according to Example VI) and mulled for three minutes. The hydrogen peroxide activator was not used in this run. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately, has a tensile strength of 91 $(0,63.10^6)$. This product has better hardness, i.e. 84, $(0,58.10^6)$ than a like product made using methyl ethyl ketone peroxide. Core strengths of 222 $(1,53.10^6)$ after 5 minutes (hardness 86), 269 $(1,85.10^6)$ after one hour (hardness 85) and 311 $(2,14.10^6)$ after 24 hours (hardness 85) are substantially higher than are obtained using methyl

## EXAMPLE XVIII

A foundry-grade sand was mixed with 1.25% wt. (based on the sand) of a 80% furfurylalcohol-formaldehyde resin prepolymer-20% crude diisopropylbenzene hydroperoxide blend (produced according to Example VI) and mulled for three minutes. Next, 18% wt. of 70% hydrogen peroxide was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about $300^oF$ can be used.

The product obtained after 20 seconds, as described above, is capable of being handled immediately, has a tensile strength of 173 $(1,20.10^6)$. This product has better hardness, i.e. 83 $(0,57.10^6)$, than a like product made using methyl ethyl ketone peroxide. Core strengths of 330 $(2,28.10^6)$ after 5 minutes (hardness 92), 458 $(3,16.10^6)$ after one hour (hardness 90) and 373 $(2,57.10^6)$ after 24 hours (hardness 84) are substantially higher than are obtained using methyl ethyl ketone peroxide.

## EXAMPLE XIX

Another run was made in which a foundry-grade sand was mixed with 1.25 wt. (based on the sand) of a 80% furfurylalcohol-formaldehyde resin prepolymer-20% crude diisopropylbenzene hydroperoxide blend (produced according to Example VI) and mulled for three minutes. Next, 18% wt. of 70% hydrogen peroxide was added and the mixture mulled for an additional three minutes. The sand/resin/peroxide mix was then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately, has a tensile strength of 166 (1,14.$10^6$). This product has better hardness, i.e. 86, than a like product made using methyl ethyl ketone peroxide. Core strengths of 299 (2,06.$10^6$) after 5 minutes (hardness 87), 351 (2,42.$10^6$) after one hour (hardness 90) and 328 (2,26.$10^6$) after 24 hours (hardness 81) are substantially higher than are obtained using methyl ethyl ketone peroxide.

## EXAMPLE XX

A foundry-grade sand is mixed with 1.25% wt. (based on the sand) of a 20% crude diisopropylbenzene hydroperoxide-80% furfurylalcohol-formaldehyde/phenol-formaldehyde/urea-formaldehyde resin prepolymer (50-20-30 wt. ratio) blend (produced according to Example VII) and mulled for three minutes. Next, 7% wt. of 70% hydrogen peroxide is added and the mixture mulled for an additional three minutes. The sand/resin/peroxide mix is then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately. This product has better hardness than a like product made using methyl ethyl ketone peroxide. Core strengths in excess of 200 (1,38.$10^6$) after 30 minutes and in excess of 275 (1,89.$10^6$) after 24 hours are substantially higher than are obtained using methyl ethyl ketone peroxide, viz. 185

$(1,28.10^6)$ after 30 minutes and 218 $(1,50.10^6)$ after 24 hours, respectively.

## EXAMPLE XXI

A foundry-grade sand is mixed with 1.25% wt. (based on the sand) of a 35% crude diisopropylbenzene hydroperoxide-65% furfurylalcohol-formaldehyde/phenol-formaldehyde/urea-formaldehyde resin prepolymer (80-10-10 wt. ratio) blend (produced according to Example VII) and mulled for three minutes. Next, 7% wt. of 70% hydrogen peroxide is added and the mixture mulled for an additional three minutes. The sand/resin/peroxide mix is then rammed or blown into a mould and gassed with $SO_2$ for about 1.0 seconds at room temperature, followed by an air purge. Gassing times of about 0.5 seconds to about 5 minutes and temperatures from room temperature to about $300^\circ F$ $(150^\circ C)$ can be used.

The product obtained after 20 seconds, as described above, is capable of being handled immediately. This product has better hardness than a like product made using methyl ethyl ketone peroxide. Core strengths in excess of 200 $(1,38.10^6)$ after 30 minutes and in excess of 275 $(1,89.10^6)$ after 24 hours are substantially higher than are obtained using methyl ethyl ketone peroxide, viz. 185 $(1,28.10^6)$ after 30 minutes and 218 $(1,50.10^6)$ after 24 hours, respectively.

## EXAMPLE XXII

A foundry-grade sand is mixed with 1.25% wt. (based on the sand) of a 20% crude diisopropylbenzene hydroperoxide and 80% phenol-formaldehyde resin prepolymer blend (produced according to Example VII) and mulled for three minutes. Next, 18% wt. of 70% hydrogen peroxide is added and the mixture mulled for an additional three minutes. The sand/resin/peroxide mix is then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately although the strength does not develop as rapidly as with comparable compositions using furfuryl alcohol-formaldehyde resins. Core strengths of 195 (1,34.10$^6$) after 2 hours and 263 (1,81.10$^6$) after 24 hours are comparable to the results obtained using methyl ethyl ketone peroxide viz. 260 (1,79.10$^6$) after 24 hours.

EXAMPLE XXIII

A foundry-grade sand is mixed with 1.25% wt. (based on the sand) of a 35% crude diisopropylbenzene hydroperoxide and 65% furfurylalcohol (resin precursor) blend (produced according to Example VIII) and mulled for three minutes. Next, 7% wt. of 70% hydrogen peroxide is added and the mixture mulled for an additional three minutes. The sand/resin/peroxide mix is then rammed or blown into a mould and gassed with $SO_2$ for about 1.0 seconds at room temperature, followed by an air purge. Gassing times of about 0.5 seconds to about 5 minutes and temperatures from room temperature to about 300°F (150°C) can be used.

The product obtained after 20 seconds, as described above, is capable of being handled immediately. This product has better hardness than a like product made using methyl ethyl ketone peroxide. Core strengths in excess of 200 (1,38.10$^6$) after 30 minutes and in excess of 275 (1,89.10$^6$) after 24 hours are substantially higher than are obtained using methyl ethyl ketone peroxide, viz. 185 (1,28.10$^6$) after 30 minutes and 218 (1,50.10$^6$) after 24 hours, respectively.

EXAMPLE XXIV

A foundry-grade sand is mixed with 1.25% wt. (based on the sand) of a 25% crude diisopropylbenzene hydroperoxide and 75% polyfurfurylalcohol (resin precursor) blend (produced according to Example VIII) and mulled for three minutes. Next, 7% wt. of 70% hydrogen peroxide was added and the mixture mulled for an additional three minutes. The sand/resin/peroxide mix is then rammed or blown into a mould and gassed with $SO_2$ for about 1.0 seconds at room temperature, followed by an air purge. Gassing times of about 0.5 seconds to about 5 minutes and temperatures from room temperature to about $300^\circ F$ ($150^\circ C$) can be used.

The product obtained after 20 seconds, as described above, is capable of being handled immediately. This product has better hardness than a like product made using methyl ethyl ketone peroxide. Core strengths in excess of 200 ($1,38.10^6$) after 30 minutes and in excess of 275 ($1,89.10^6$) after 24 hours are substantially higher than are obtained using methyl ethyl ketone peroxide, viz. 185 ($1,28.10^6$) after 30 minutes and 218 ($1,50.10^6$) after 24 hours, respectively.

## CLAIMS

1. A storage stable, resin/peroxide composition comprising a major amount of a resin precursor or prepolymer selected from the group consisting of furfuryl alcohol and polyfurfuryl alcohol resin precursors, and furfuryl alcohol-formaldehyde resin, phenolic and urea-formaldehyde modified furfuryl alcohol-formaldehyde resin, phenolic modified furfuryl alcohol-formaldehyde resin, urea-formaldehyde modified furfuryl alcohol-formaldehyde resin and phenolic resin prepolymers, and a minor amount of a peroxide characterized in that said peroxide comprises a diisopropylbenzene hydroperoxide.

2. A composition according to Claim 1 in which said hydro-peroxide is diisopropylbenzene monohydroperoxide.

3. A composition according to Claim 2 in which said diisopropylbenzene monohydroperoxide comprises a mixture of a major amount of diisopropylbenzene monohydroperoxide and a minor amount of diisopropylbenzene dihydroperoxide.

4. A composition according to any one of Claims 1 to 3 which contains from 5 to 40% by weight of said hydroperoxide based on said prepolymer.

5. A composition according to any one of Claims 1 to 4 wherein is present an organic solvent which is a solvent for hydrogen peroxide and said hydroperoxide.

6. A composition according to Claim 5 wherein said solvent is cyclohexanone.

7. A method of forming a sand core or mould which method comprises: mixing a major amount of sand with a minor amount of a premixed composition comprising a minor amount of diisopropylbenzene hydroperoxide and a major amount of a resin prepolymer or precursor, forming said mixture into the shape of a core or mould, and gassing the formed mixture with sulfur dioxide for a period of from a fraction of a second to several minutes at a temperature of from room temperature or ambient to about 150°C.

8.    A method according to Claim 7 in which is used a resin prepolymer/peroxide composition according to any one of claims 1 to 6.

9.    A method according to Claim 7 or Claim 8 in which the sand and resin prepolymer/peroxide mixture is further treated with up to about 20% hydrogen peroxide prior to gassing with sulfur dioxide.

10.    A sand core or mould comprising a polymerised mixture of a major amount of sand with a minor amount of a premixed composition comprising a minor amount of diisopropylbenzene hydroperoxide and a major amount of a resin prepolymer or precursor according to any one of Claims 1 to 6.

## EUROPEAN SEARCH REPORT

European Patent
Office

Application number

EP 81 30 5211.5

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | <u>DE - A1 - 2 908 198</u> (S.A.P.I.C.)<br>* claim 9 *<br>  &  GB - A - 2 016 484<br>        —— | 1 | B 22 C 1/16<br><br>B 22 C 1/22<br><br>B 22 C 9/12<br><br>C 08 J 3/24 |
| A | GIESSEREI, Vol. 66, No. 16/17<br>6 August 1979<br>Düsseldorf<br>G. RICHARD "Das Hardox-SO$_2$-Verfahren zur Härtung von Kunstharzsand"<br>* pages 643 to 644 *<br>        —— | 1 | |
| | | | TECHNICAL FIELDS SEARCHED (Int. Cl.³) |
| A,D | <u>US - A - 3 879 339</u> (RICHARD)<br>* abstract *<br>  &  DE - A - 2 239 835<br>  &  CH - A5 - 561 744<br>        ———— | 1 | B 22 C 1/00<br><br>B 22 C 9/00<br><br>C 08 J 3/00<br><br>C 08 K 5/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 27-01-1982 | GOLDSCHMIDT |

EPO Form 1503.1  06.78